# FASCICULE DE BREVET EUROPEEN

(11) **EP 2 657 134 B1**
(45) Date de publication et mention de la délivrance du brevet: **31.08.2016**
(21) Numéro de dépôt: 13001782.5
(22) Date de dépôt: 08.04.2013
(51) Int. Cl.: B64D 37/00, F02C 7/236, F02M 59/00

(54) **Réseau d'alimentation en carburant d'un moteur de giravion, comprenant des moyens d'amorçage d'une pompe d'aspiration du carburant depuis une nourrice**
Kraftstoff-Versorgungsvorrichtung eines Motors eines Drehflüglers, umfassend Mittel zum initiieren einer Saugpumpe für Kraftstoff von einem Verteiler
A fuel supply of a motor of a rotorcraft, comprising means for initiating a suction pump for fuel from a distributor

(30) Priorité: 26.04.2012 FR 1201228
(43) Date de publication de la demande: 30.10.2013
(73) Titulaire: Airbus Helicopters, 13725 Marignane Cedex (FR)
(72) Inventeur: Lollini, Lionel, 26120 Montvendre (FR)
(74) Mandataire: GPI & Associés

(56) Documents cités:
- WO-A1-2007/036480
- GB-A- 851 428
- US-A- 3 259 066
- US-A- 3 275 061

## Description

La présente invention est du domaine des aéronefs, giravions plus spécifiquement. Les giravions sont des aéronefs présentant la particularité d'être équipés d'au moins une voilure tournante procurant au moins leur sustentation, voire aussi leur propulsion et/ou leur manoeuvre en vol. Une telle voilure tournante est entraînée en rotation à vitesse généralement constante par un groupe de motorisation comprenant un ou plusieurs organes moteurs.

La voilure tournante est susceptible d'être indifféremment une voilure tournante principale procurant au moins la sustentation sinon aussi la propulsion du giravion et/ou sa manoeuvre en vol, une hélice propulsive dans le cadre d'un hélicoptère hybride par exemple, ou encore une voilure tournante de queue affectée à la manoeuvre en lacet du giravion.

La présente invention relève plus particulièrement d'un réseau fluidique d'alimentation en carburant d'un dit groupe de motorisation dédié à l'entraînement en rotation d'au moins une voilure tournante d'un giravion.

Le dit groupe de motorisation est susceptible de comporter un ou plusieurs organes moteurs, selon des critères catégoriels règlementés et communément admis dans le domaine des giravions. Pour limiter le nombre d'organes moteurs embarqués à bord d'un giravion, il est commun d'exploiter un même groupe de motorisation pour l'entraînement en rotation des diverses voilures tournantes équipant le giravion. Traditionnellement, le groupe de motorisation est implanté sur le giravion au plus proche de la voilure tournante principale située au sommet d'un habitacle du giravion, le ou les organes moteurs étant alimentés en carburant par l'intermédiaire d'un réseau fluidique équipant le giravion.

Un tel réseau fluidique comprend un réservoir à carburant qui est couramment implanté en soubassement de l'habitacle. Le réservoir est susceptible de comporter un ou plusieurs compartiments en communication fluidique naturelle entre eux. Pour un réservoir de grande capacité, une nourrice est fréquemment logée à l'intérieur du réservoir. Le carburant est prélevé depuis la nourrice pour alimenter un organe moteur qui lui est affecté. La nourrice est formée d'une enceinte placée à l'intérieur du réservoir, et est d'une capacité devant permettre un approvisionnement de l'organe moteur en quantité de carburant prédéfinie au regard de conditions réglementaires de vol sécurisé. La nourrice et le réservoir forment des capacités indépendantes au regard d'une libre communication du carburant depuis le réservoir vers la nourrice.

La nourrice est approvisionnée en carburant depuis le réservoir par l'intermédiaire d'un circuit de transfert mettant en oeuvre une pompe de transfert logée à l'intérieur de la nourrice. Le circuit de transfert comporte notamment un éjecteur ou organe analogue placé à l'intérieur du réservoir, pour piéger un apport en carburant et le refouler vers la nourrice. A partir d'une circulation d'un flux primaire de carburant générée par la pompe de transfert à l'intérieur du circuit de transfert, un tel éjecteur induit une capture d'un flux secondaire de carburant qui est refoulé conjointement avec le flux primaire hors de l'éjecteur vers la nourrice. La capacité de la nourrice étant limitée au regard de ladite quantité de carburant prédéfinie, la nourrice est équipée d'un dispositif de trop plein restituant par débordement l'excès de carburant vers le réservoir.

Compte tenu de la proximité entre le réservoir et la nourrice, et compte tenu des faibles pertes de charge induites par le circuit de transfert, la pompe de transfert est une pompe basse pression, à titre indicatif de l'ordre inférieure à 200 mb (200 millibars), et plus couramment inférieure à 100 mb. La pompe de transfert est notamment entraînée par énergie électrique prélevée à partir du réseau de bord électrique du giravion.

Un éjecteur comporte dans sa généralité une buse amont d'admission d'un flux primaire de fluide vers un canal principal muni d'un rétreint. Un canal secondaire d'admission d'un flux secondaire de fluide débouche sur le canal principal en amont de la buse. La circulation du flux primaire à l'intérieur du canal principal génère par aspiration une capture du flux secondaire de fluide à travers le canal secondaire. Le flux secondaire et le flux primaire se mélangent en amont du rétreint, puis le flux global de fluide issu de ce mélange est évacué hors de l'éjecteur en aval du rétreint. Les notions amont et aval sont à considérer au regard du sens d'écoulement des flux afférents à travers l'éjecteur.

L'éjecteur est un organe couramment utilisé dans le domaine de l'aéronautique pour les réseaux fluidiques d'alimentation en carburant d'un organe moteur. Un éjecteur permet traditionnellement de réguler selon les besoins le débit du carburant circulant à travers un réseau fluidique. Une telle capacité de l'éjecteur est par exemple mise à profit pour alimenter la nourrice à partir du réservoir par l'intermédiaire du circuit de transfert, tel que précédemment mentionné. Il est connu d'autres applications de tels éjecteurs dans le cadre de l'alimentation en carburant d'un organe moteur d'aéronef.

Par exemple selon le document US3275061 (BOEING Co.), un éjecteur d'alimentation est implanté en fond de nourrice sur un circuit d'alimentation en carburant d'un organe moteur d'un aéronef, avion notamment. Une pompe d'aspiration est exploitée pour prélever du carburant depuis la nourrice et l'acheminer vers l'organe moteur à travers le circuit d'alimentation. La pompe d'aspiration est aussi mise à profit pour transférer le carburant entre le réservoir et la nourrice, par l'intermédiaire d'un circuit de transfert greffé sur le circuit d'alimentation et muni d'un éjecteur de transfert placé à l'intérieur du réservoir.

Dans ce cas, la pompe d'aspiration est une pompe à très haute pression, traditionnellement de l'ordre de 10 bars. La pompe d'aspiration prélève depuis la nourrice la quantité de carburant nécessaire pour répondre aux besoins en carburant de l'organe moteur. Une telle quantité de carburant est susceptible de cumuler un dit flux primaire et un dit flux secondaire fournis en sortie de l'éjecteur d'alimentation, pour optimiser l'apport potentiel de carburant vers l'organe moteur. En phase de fonctionnement de l'organe moteur, l'éjecteur d'alimentation est notamment mis à profit pour accroître le débit de carburant alimentant l'organe moteur en fonction de ses besoins, tel qu'en phase d'accélération de l'aéronef.

Un problème est posé pour les giravions en raison de la distance de séparation conséquente suivant l'axe de gravité entre le réservoir et le groupe de motorisation. Au regard de l'exemple courant précédemment visé selon lequel le réservoir et le groupe de motorisation sont respectivement placés en soubassement et au sommet de l'habitacle, une telle distance de séparation est à titre indicatif susceptible d'atteindre 2,5 mètres, voire davantage.

Pour des raisons de sécurité, la pression du carburant acheminé le long de l'habitacle d'un giravion à travers un circuit d'alimentation reliant une nourrice à un organe moteur, doit être limitée au mieux. Traditionnellement, une telle pression est limitée à une pression de l'ordre du bar. A titre indicatif, la pression du carburant acheminé par le circuit d'alimentation est comprise entre 1 bar et 2 bars. Le circuit d'alimentation est dimensionné en conséquence pour pouvoir fournir le débit en carburant nécessaire à l'organe moteur en mode nominal de fonctionnement.

Selon une première méthode courante d'alimentation en carburant d'un groupe de motorisation de giravion, la ou les nourrices respectivement affectées à un organe moteur logent chacune en leur fond une pompe de gavage. La pompe de gavage est noyée à l'intérieur de la nourrice en étant entraînée notamment par l'énergie électrique fournie par le réseau de bord électrique du giravion. La pompe de gavage prélève le carburant depuis le fond de la nourrice pour le refouler à travers le circuit d'alimentation vers l'organe moteur.

Selon une deuxième méthode courante d'alimentation en carburant d'un groupe de motorisation de giravion, le ou les organes moteurs sont individuellement équipés d'une pompe d'aspiration qui prélève le carburant par aspiration depuis la nourrice affectée à cet organe moteur. Le carburant est entraîné par aspiration à travers le circuit d'alimentation, la pompe d'aspiration prélevant la quantité de carburant nécessaire pour répondre aux besoins en carburant de l'organe moteur.

Un avantage de ladite deuxième méthode est procuré au regard de la sécurisation du giravion en cas de rupture du circuit d'alimentation, susceptible d'intervenir lors d'un atterrissage d'urgence par exemple. Le circuit d'alimentation étant rompu, la pompe d'aspiration n'est plus apte à prélever du carburant hors de la nourrice, ce qui permet d'éviter une échappée et une dispersion de carburant hors du réservoir à travers la zone de rupture du circuit d'alimentation.

Cependant, un problème posé par cette deuxième méthode réside dans l'amorçage de la pompe d'aspiration en cas de présence d'air à l'intérieur du circuit d'alimentation. En raison de ladite distance de séparation entre la nourrice et la pompe d'aspiration localisée à proximité du groupe de motorisation, cette présence d'air résulte par exemple d'une mise à l'air du circuit d'alimentation suite à une opération de maintenance du groupe de motorisation, ou par exemple encore résulte de requêtes de démarrage de l'organe moteur qui sont inopérantes et répétées successivement.

Pour résoudre ce problème, une solution traditionnelle réside dans l'adjonction au réseau fluidique d'une pompe d'amorçage de la pompe d'aspiration. Une telle pompe d'amorçage est placée en fond de nourrice en communication fluidique avec le circuit d'alimentation. La pompe d'amorçage est notamment alimentée en énergie électrique à partir du réseau de bord électrique du giravion.

La pompe d'amorçage est activée volontairement par le pilote du giravion, préalablement au démarrage de l'organe moteur, pour approvisionner le circuit d'alimentation et amorcer la pompe d'aspiration. L'organe moteur ayant démarré, la pompe d'amorçage est désactivée et la pompe d'aspiration procure le débit de carburant nécessaire aux besoins de l'organe moteur. Le débit de carburant acheminé vers l'organe moteur à travers le circuit d'alimentation est régulé à partir de la pompe d'aspiration, par l'intermédiaire de moyens de commande de l'injection vers l'organe moteur du carburant fourni par la pompe d'aspiration.

Il est opportun dans le domaine de l'aéronautique de rechercher à limiter le nombre d'organes embarqués à bord d'un aéronef, sans cependant porter atteinte ni à la sécurisation du fonctionnement de l'aéronef, ni à la faculté de l'aéronef à répondre aux conditions réglementaires de sécurité en cas de dysfonctionnement.

Il est aussi opportun dans le domaine de l'aéronautique de rechercher à améliorer l'ergonomie des aéronefs, pour soulager au mieux le pilote des tâches qu'il doit accomplir et pour éviter d'éventuelles causes de dysfonctionnement susceptibles d'être induites par une négligence du pilote.

Il apparaît qu'au regard de telles opportunités et dans le cadre de la dite deuxième méthode d'alimentation en carburant d'un groupe de motorisation d'un giravion, les conditions d'amorçage de la pompe d'aspiration méritent d'être améliorées.

Le but de la présente invention est de proposer une architecture d'un réseau fluidique d'alimentation en carburant d'au moins un organe moteur d'un groupe de motorisation d'entraînement en rotation d'au moins une voilure tournante d'un giravion, prenant notamment en compte les diverses difficultés, contraintes et opportunités qui ont été précédemment énoncées.

Le réseau fluidique de la présente invention est plus particulièrement du type mettant en oeuvre une pompe d'aspiration du carburant pour alimenter en vol un organe moteur du groupe de motorisation, depuis une nourrice logée dans un réservoir à carburant et affectée à cet organe moteur.

La présente invention vise plus particulièrement à proposer un tel réseau fluidique dont l'architecture réponde de manière satisfaisante aux contraintes liées à l'amorçage de la pompe d'aspiration, en prenant en compte les dites opportunités à rechercher.

Le réseau fluidique de la présente invention est un réseau fluidique d'alimentation en carburant d'au moins un organe moteur d'un groupe de motorisation équipant un giravion. Le dit groupe de motorisation est affecté à l'entraînement en rotation d'au moins une voilure tournante du giravion.

Le réseau fluidique comporte au moins un réservoir à carburant logeant une nourrice. Le réservoir est susceptible d'être subdivisé en plusieurs compartiments qui sont en communication fluidique naturelle entre eux. La nourrice est formée d'une enceinte placée à l'intérieur du réservoir, la nourrice et le réservoir formant des capacités indépendantes au regard d'une libre circulation du carburant depuis le réservoir vers la nourrice. La nourrice est alimentée en carburant à partir du réservoir, par l'intermédiaire d'un circuit de transfert du carburant depuis le réservoir vers la nourrice. Le circuit de transfert est un circuit à basse pression. A titre indicatif cette pression est susceptible d'être inférieure à 100 millibars environ.

Le dit circuit de transfert comporte au moins une pompe de transfert plongée dans la nourrice et au moins un éjecteur de transfert plongé dans le réservoir. Un flux de transfert de carburant en provenance de la nourrice circule à l'intérieur du circuit de transfert, sous l'effet de son entraînement par la pompe de transfert. Ce flux de transfert est acheminé jusqu'à l'éjecteur de transfert pour prélever par effet venturi du carburant à l'intérieur du réservoir, afin d'approvisionner la nourrice en carburant par retour du carburant à l'intérieur de la nourrice.

Le réseau fluidique comporte aussi une pompe d'aspiration du carburant, équipant l'organe moteur et traditionnellement placée sur le giravion au voisinage du groupe de motorisation. La pompe d'aspiration prélève le carburant par aspiration depuis la nourrice, et l'achemine à haute pression vers l'organe moteur à travers un circuit d'alimentation.

Le circuit d'alimentation s'étend au moins entre une extrémité proximale et une extrémité distale plongeant dans la nourrice, l'extrémité proximale étant opposée à l'extrémité distale et étant en prise fluidique avec la pompe d'aspiration. De préférence, le circuit d'alimentation est prolongé à son extrémité proximale par des moyens de commande d'une injection vers l'organe moteur du carburant entraîné depuis la nourrice par la pompe d'aspiration.

Il est à considérer la relativité entre les notions de basse pression et de haute pression, dont des valeurs ont été données à titre indicatif. La basse pression d'acheminement du carburant à travers le circuit de transfert est notoirement considérée significativement inférieure à la haute pression d'acheminement du carburant à travers le circuit d'alimentation, une telle différence de pression étant communément d'un rapport compris entre 4 et 6.

Le réseau fluidique comporte encore une pompe d'amorçage en carburant de la pompe d'aspiration. La pompe d'amorçage est plongée dans la nourrice, à partir de laquelle nourrice la pompe d'amorçage prélève du carburant et le refoule vers le circuit d'alimentation. La pompe d'amorçage procure une amenée du carburant depuis la nourrice vers la pompe d'aspiration préalablement au démarrage de l'organe moteur, pour amorcer la pompe d'aspiration en carburant et en repoussant une éventuelle colonne d'air susceptible d'être formée à l'intérieur du circuit d'alimentation entre ses dites extrémités.

Selon la présente invention, le circuit d'alimentation est muni à son extrémité distale d'un éjecteur d'alimentation plongé à l'intérieur de la nourrice. L'éjecteur d'alimentation est notamment ménagé au débouché de l'extrémité distale du circuit d'alimentation, et autorise un passage à son travers du carburant en provenance de la nourrice.

L'éjecteur d'alimentation est notamment un éjecteur traditionnel comportant une buse d'admission d'un flux primaire de carburant vers un canal principal à rétreint. La buse achemine le flux primaire de carburant à une bouche d'entrée du canal principal ménagée en amont du rétreint, le carburant étant évacué hors de l'éjecteur à travers une bouche de sortie du canal principal ménagée en aval du rétreint. L'éjecteur comporte aussi un canal secondaire de circulation d'un flux secondaire de carburant. Le canal secondaire débouche en amont du canal principal, par exemple à l'intérieur d'une chambre de l'éjecteur traversée par la buse. Les notions amont, aval, entrée et sortie sont à considérer au regard du sens d'écoulement du fluide à travers les canaux et/ou les organes et circuits à travers lesquels est acheminé ce fluide.

Toujours selon la présente invention, le circuit de transfert est en prise fluidique avec l'éjecteur d'alimentation par l'intermédiaire d'une dite buse d'admission d'un flux primaire de carburant. Le flux primaire de carburant est évacué par l'éjecteur d'alimentation à travers un dit canal principal à rétreint vers le circuit d'alimentation. Une telle évacuation du flux primaire est mise à profit préalablement au démarrage de l'organe moteur, pour amorcer la pompe d'aspiration. La pompe d'aspiration étant amorcée et mise en fonctionnement, le carburant est acheminé par la pompe de transfert à travers le circuit de transfert vers l'éjecteur d'alimentation, et est ensuite entraîné par la pompe d'aspiration depuis l'éjecteur d'alimentation vers le circuit d'alimentation.

L'approvisionnement en carburant de l'organe moteur en quantité répondant à ses besoins ponctuels, est effectué à partir de l'aspiration du carburant à travers le canal principal de l'éjecteur d'alimentation par la pompe d'aspiration. Le débit de carburant nécessaire au fonctionnement de l'organe moteur étant régulé par la pompe d'aspiration, un éventuel surplus de carburant en provenance du circuit de transfert et admis par l'éjecteur d'alimentation est potentiellement évacué à travers un dit canal secondaire de l'éjecteur d'alimentation.

Le réseau fluidique comporte des moyens d'amorçage de la pompe d'aspiration associant la pompe de transfert formant une dite pompe d'amorçage et l'éjecteur d'alimentation ménagé sur le circuit d'alimentation et plongé dans la nourrice. L'éjecteur d'alimentation procure un approvisionnement en carburant de la pompe d'aspiration, selon des pressions et débits du flux de carburant propres à différentes phases d'exploitation de l'éjecteur d'alimentation :
-) préalablement au démarrage de l'organe moteur et de la pompe d'aspiration, le carburant est admis à travers la buse depuis le circuit de transfert vers l'éjecteur d'alimentation, puis est refoulé par l'éjecteur d'alimentation vers le circuit d'alimentation à travers le canal principal. La pompe d'aspiration n'étant pas mise en oeuvre préalablement à son amorçage, le flux de carburant évacué par l'éjecteur d'alimentation vers le circuit d'alimentation est issu d'un dit flux primaire de carburant acheminé par le circuit de transfert vers l'éjecteur d'alimentation. Le carburant en provenance du circuit de transfert est admis et refoulé par l'éjecteur d'alimentation à basse pression et faible débit. De tels basse pression et faible débit sont suffisants pour surmonter une éventuelle colonne d'air présente à l'intérieur du circuit d'alimentation et finalement pour amorcer en carburant la pompe d'aspiration.
-) postérieurement à la mise en oeuvre de la pompe d'aspiration préalablement amorcée, la pompe de transfert est maintenue activée pour approvisionner la nourrice en carburant depuis le réservoir par l'intermédiaire du circuit de transfert. Le carburant acheminé vers l'éjecteur d'alimentation par le circuit de transfert est entraîné par aspiration par la pompe d'aspiration depuis l'éjecteur d'alimentation vers le circuit d'alimentation. Le débit et la pression du flux de carburant générés en sortie du canal principal de l'éjecteur d'alimentation, sont issus de l'aspiration générée par la pompe d'aspiration à travers le circuit d'alimentation. Une telle aspiration est générée par la pompe d'aspiration selon les besoins de l'organe moteur, indépendamment du débit du flux de carburant admis par l'éjecteur d'alimentation à travers la buse depuis le circuit de transfert. Un éventuel surplus de carburant admis par l'éjecteur d'alimentation est refoulé vers l'intérieur de la nourrice à travers le canal secondaire, notamment en phase de démarrage de l'organe moteur pour lequel les besoins en carburant sont faibles.

Dans sa généralité, le réseau fluidique de la présente invention est principalement reconnaissable en ce que le circuit d'alimentation est muni d'un éjecteur d'alimentation plongé à l'intérieur de la nourrice. L'éjecteur d'alimentation comporte une buse d'admission d'un flux primaire de carburant vers un canal principal à rétreint débouchant sur le circuit d'alimentation. L'éjecteur d'alimentation comporte aussi un canal secondaire de circulation d'un flux secondaire de carburant. Ledit canal secondaire débouche en amont du canal principal. La pompe d'amorçage est formée par la pompe de transfert. Le circuit de transfert comporte une dérivation d'admission à travers la buse d'un dit flux primaire de carburant vers le canal principal. Ladite admission du flux primaire de carburant à travers la buse est alimentée par le circuit de transfert en étant forcée à basse pression par la pompe de transfert.

La dite dérivation est notamment ménagée sur le circuit de transfert en aval de la pompe de transfert et en amont de l'éjecteur de transfert.

Sous condition d'une inhibition de la mise en oeuvre de la pompe d'aspiration, l'éjecteur d'alimentation est un organe de refoulement à basse pression et à faible débit vers le circuit d'alimentation d'un flux d'amorçage en carburant de la pompe d'aspiration. Le dit flux d'amorçage est alimenté à partir du flux primaire de carburant en provenance du circuit de transfert, un excès de carburant admis par l'éjecteur d'alimentation depuis le circuit de transfert étant évacué hors de l'éjecteur d'alimentation à travers le canal secondaire.

Sous condition d'une activation de la mise en oeuvre de la pompe d'aspiration, l'éjecteur d'alimentation est un organe d'aspiration de carburant entraîné à travers le canal principal vers le circuit d'alimentation par la pompe d'aspiration. La pompe de transfert génère un apport marginal en pression au flux de carburant évacué hors de l'éjecteur d'alimentation vers le circuit d'alimentation, le débit du dit flux de carburant évacué étant régulé par la pompe d'aspiration pour une pression donnée imposée par les caractéristiques du circuit d'alimentation et de la pompe d'aspiration.

La présente invention a aussi pour objet une méthode de mise en oeuvre d'un réseau fluidique tel qu'il vient d'être décrit.

Une telle méthode est principalement reconnaissable en ce que préalablement à une opération de démarrage de l'organe moteur, la méthode comprend en phase d'amorçage de la pompe d'aspiration une opération de refoulement par l'éjecteur d'alimentation vers le circuit d'alimentation d'un flux de carburant à basse pression et faible débit d'amorçage de la pompe d'aspiration. Le carburant issu de ce flux de carburant d'amorçage de la pompe d'aspiration est prélevé à partir de la nourrice par l'intermédiaire du circuit de transfert, la dite opération de refoulement étant effectuée à partir d'une activation du fonctionnement de la pompe de transfert. L'opération d'amorçage de la pompe d'aspiration correspond à une opération de refoulement du carburant à travers l'éjecteur d'alimentation au moyen de la pompe de transfert.

Selon une approche spécifique de la présente invention, la pompe d'aspiration est équipée de moyens d'amorçage associant la pompe de transfert qui forme la pompe d'amorçage, et l'éjecteur qui procure une pressurisation du flux de carburant en provenance du circuit de transfert pour le refouler à une pression adaptée à l'entraînement du carburant à travers le circuit d'alimentation, depuis la nourrice jusqu'à la pompe d'aspiration pour son amorçage.

Plus particulièrement, la pompe de transfert est susceptible de fonctionner à une pression juste nécessaire pour alimenter la nourrice en carburant depuis le réservoir, indépendamment des besoins en pression du carburant acheminé depuis la nourrice à travers le circuit d'alimentation. Les dits besoins en pression correspondent à une pression d'amorçage apte à entraîner le carburant à travers le circuit d'alimentation depuis la nourrice jusqu'à la pompe d'aspiration pour son amorçage préalablement au démarrage de l'organe moteur. La carence de pression entre la pression d'amorçage et la pression de carburant générée par la pompe de transfert, est comblée par l'éjecteur qui reçoit le carburant en provenance du circuit de transfert à une pression correspondante à la pression de fonctionnement de la pompe de transfert, et qui refoule le carburant qu'il reçoit à ladite pression d'amorçage.

Selon une telle approche avantageuse de la mise en oeuvre du réseau fluidique de la présente invention, en phase d'amorçage de la pompe d'aspiration, la pompe de transfert formant la pompe d'amorçage est mise en oeuvre à une pression de fonctionnement propre à l'approvisionnement en carburant de la nourrice depuis le réservoir. Une telle disposition évite un éventuel surdimensionnement de la pompe de transfert qui est à éviter, et permet de greffer aisément sur une architecture de réseau fluidique existante les moyens d'amorçage de la pompe d'aspiration. Ladite pression de fonctionnement de la pompe de transfert est indépendante, y compris notamment inférieure, au regard d'une pression d'amorçage propre à entraîner du carburant à travers le circuit d'alimentation depuis la nourrice jusqu'à la pompe d'aspiration en procurant son amorçage. L'éjecteur produit une pressurisation et un refoulement vers le circuit d'alimentation du flux de carburant qu'il reçoit en provenance du circuit de transfert, à une pression au moins égale à ladite pression d'amorçage. Il est compris que l'éjecteur est dimensionné pour procurer ladite pressurisation et le dit refoulement.

En phase de fonctionnement de l'organe moteur, les mises en oeuvre respectives de la pompe d'aspiration et de la pompe de transfert sont entretenues. La méthode comprend une opération de régulation par la pompe d'aspiration du débit de carburant entraîné par aspiration à travers l'éjecteur d'alimentation, depuis la nourrice vers le circuit d'alimentation. Ladite régulation de débit de carburant est effectuée par aspiration régulée du carburant par la pompe d'aspiration en fonction des besoins en carburant de l'organe moteur. Cette régulation de débit de carburant est effectuée indépendamment du débit de carburant admis en force à travers l'éjecteur d'alimentation depuis le circuit de transfert alimenté en carburant par la pompe de transfert dont la mise en oeuvre est maintenue activée.

La pression en sortie de l'éjecteur d'alimentation du flux de carburant admis vers le circuit d'alimentation sous l'effet de son entraînement par la pompe d'aspiration, est avantageusement confortée par la basse pression du dit flux primaire de carburant dont l'admission vers l'éjecteur d'alimentation est entretenue par le maintien de la mise en oeuvre de la pompe de transfert. La pompe de transfert procure un apport marginal de pression au flux de carburant évacué hors de l'éjecteur d'alimentation vers le circuit d'alimentation, en assistant la pompe d'aspiration dans l'effort à fournir pour approvisionner en carburant le circuit d'alimentation.

Indifféremment en phase d'amorçage de la pompe d'aspiration ou en phase de démarrage de l'organe moteur, voire encore en phase de fonctionnement de l'organe moteur en fonction des besoins en carburant de l'organe moteur, un éventuel surplus de carburant admis par l'éjecteur d'alimentation depuis le circuit de transfert est refoulé vers la nourrice à travers le canal secondaire de l'éjecteur d'alimentation.

Un exemple de réalisation de la présente invention va être décrit en relation avec les figures de la planche annexée, dans laquelle :
- la fig.1 est un schéma illustrant un réseau fluidique d'alimentation en carburant d'une pompe d'aspiration équipant un organe moteur d'un giravion.

Les fig.2 et fig.3 sont des illustrations schématiques d'un éjecteur d'alimentation équipant un circuit d'alimentation que comporte le réseau fluidique représenté sur la fig.1, selon des modalités respectives de fonctionnement de l'éjecteur d'alimentation.

La fig.4 est un schéma illustrant des modalités de circulation par aspiration du carburant à travers l'éjecteur d'alimentation représenté sur les fig.2 et fig.3.

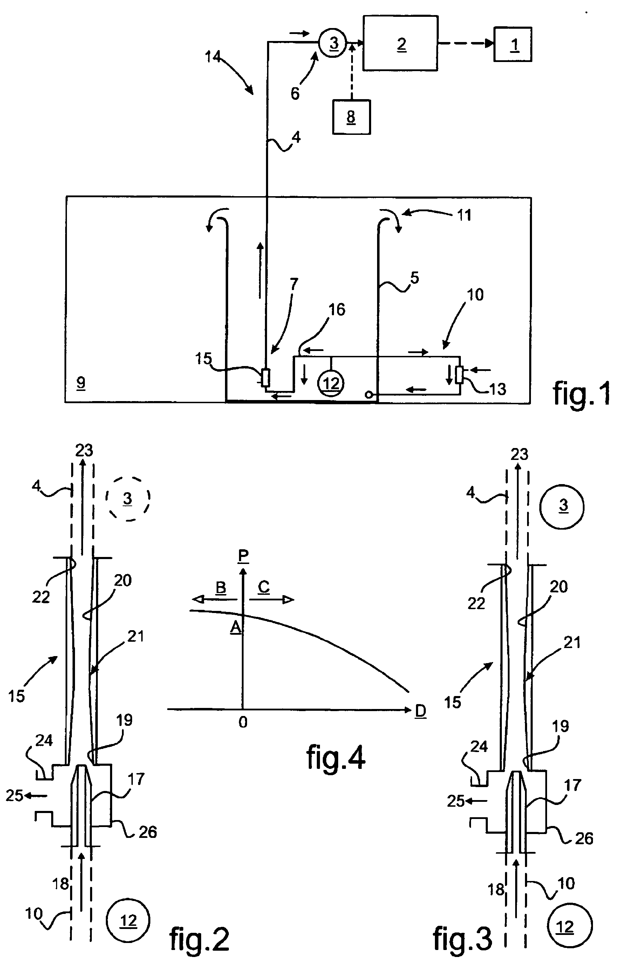

Sur la fig.1, une voilure tournante 1 de giravion est entraînée en rotation par un organe moteur 2 à combustion. L'organe moteur 2 est approvisionné en carburant au moyen d'une pompe d'aspiration 3 dont il est équipé. La pompe d'aspiration 3 prélève du carburant à travers un circuit d'alimentation 4, par aspiration depuis une nourrice 5 ménageant une réserve de carburant. L'extrémité proximale 6 du circuit d'alimentation 4 est en communication fluidique avec la pompe d'aspiration 3. L'extrémité distale 7 du circuit d'alimentation 4 est en communication fluidique avec le fond de la nourrice 5.

Les besoins en carburant de l'organe moteur 2 en fonctionnement sont gérés à partir d'un débit de carburant fourni par la pompe d'aspiration 3 à une pression donnée, par l'intermédiaire de moyens de commande 8 de l'injection de carburant en provenance de la pompe d'aspiration 3 vers l'organe moteur 2. La pompe d'aspiration 3 est une pompe à haute pression, à titre indicatif de l'ordre du bar.

La nourrice 5 est une enceinte placée à l'intérieur d'un réservoir 9 à carburant, et est d'une capacité procurant une alimentation en carburant de l'organe moteur 2 pendant une période prédéterminée. Un circuit de transfert 10 de carburant est ménagé entre la nourrice 5 et le réservoir 9, pour approvisionner la nourrice 5 en carburant à partir du réservoir 9. Le débit de carburant acheminé vers la nourrice 5 par le circuit de transfert 10 est supérieur à celui nécessaire à l'approvisionnement en carburant de l'organe moteur 2 en fonctionnement. Un éventuel excès de carburant est naturellement évacué depuis la nourrice 5 vers le réservoir 9 par l'intermédiaire d'un dispositif à déversoir 11 équipant la nourrice 5.

Le circuit de transfert 10 comporte une pompe de transfert 12 plongée à l'intérieur de la nourrice 5, et s'étend entre la nourrice 5 et le réservoir 9. Le circuit de transfert 10 comporte un éjecteur de transfert 13 placé à l'intérieur du réservoir 9. A partir du flux de carburant généré par la pompe de transfert 12 et prélevé à partir de la nourrice 5, l'éjecteur de transfert 13 capte par effet venturi un apport de carburant pour le renvoyer vers la nourrice 5.

La pompe de transfert 12 est une pompe basse pression, à titre indicatif d'une pression de l'ordre comprise entre 100 millibars et 150 millibars. Une telle basse pression est suffisante pour acheminer le carburant à travers le circuit de transfert 10, compte tenu de la proximité entre le réservoir 9 et la nourrice 5. A titre indicatif, le débit de carburant circulant à l'intérieur du circuit de transfert 10 est compris entre 300 l/h (litres par heure) et 500 l/h environ.

A bord d'un giravion, le réservoir 9 est traditionnellement placé à une distance conséquente en élévation de l'organe moteur 2. La direction d'élévation est à considérer au regard de l'axe de gravité en station naturelle de repos du giravion au sol. Selon un exemple courant, l'organe moteur 2 est implanté au sommet d'un habitacle du giravion tandis que le réservoir 9 est placé en soubassement de cet habitacle. Une telle distance de séparation entre l'organe moteur 2 et le réservoir 9 induit une extension en élévation du circuit d'alimentation 4, avec pour conséquence la présence éventuelle d'air à l'intérieur de la colonne 14 formée par le circuit d'alimentation 4. Une telle colonne 14 rend délicat l'amorçage de la pompe d'aspiration 3 préalablement à un démarrage de l'organe moteur 2.

Pour amorcer la pompe d'aspiration 3 nonobstant une présence d'air dans la colonne 14, la pompe de transfert 12 est exploitée pour former une pompe d'amorçage de la pompe d'aspiration 3. Cependant, si le débit en carburant circulant à travers le circuit de transfert 10 est suffisant, la pression fournie par la pompe de transfert 12 est potentiellement insuffisante pour surpasser la colonne 14. Un éjecteur d'alimentation 15 est associé à la pompe de transfert 12 pour procurer un surcroît de pression du carburant refoulé par l'éjecteur d'alimentation 15 depuis la nourrice 5 vers la pompe d'aspiration 3.

Plus particulièrement, le circuit d'alimentation 4 est muni d'un éjecteur d'alimentation 15 plongé à l'intérieur de la nourrice 5. Une dérivation 16 du circuit de transfert 10 est en communication fluidique avec une buse de l'éjecteur d'alimentation 15 pour refouler du carburant vers la pompe d'aspiration 3 en vue de son amorçage préalablement au démarrage de l'organe moteur 2. La dite dérivation 16 est de préférence ménagée sur le circuit de transfert 10 en aval de la pompe de transfert 12 et en amont de l'éjecteur de transfert 13.

En phase de fonctionnement de l'organe moteur 2, le carburant acheminé vers l'éjecteur d'alimentation 15 à partir du circuit de transfert 10, est entraîné par aspiration au moyen de la pompe d'aspiration 3, pour répondre aux besoins en carburant de l'organe moteur 3.

Plus particulièrement sur les fig.2 et fig.3, l'éjecteur d'alimentation 15 est un éjecteur de structure traditionnelle comportant une buse 17 d'admission d'un flux primaire 18 de carburant vers une bouche d'entrée 19 d'un canal principal 20 à rétreint 21. Une bouche de sortie 22 du canal principal 20 permet l'évacuation hors de l'éjecteur d'alimentation 15 d'un flux de carburant 23 vers le circuit d'alimentation 4.

L'éjecteur d'alimentation 15 comporte un canal secondaire 24 de circulation du carburant. Sur l'exemple de réalisation illustré, le canal secondaire 24 débouche à l'intérieur d'une chambre 26 ménagée en amont du canal principal 20 et traversée par la buse 17. L'éjecteur d'alimentation 15 est dimensionné pour permettre un entraînement du carburant à son travers sous l'effet de l'aspiration générée par la pompe d'aspiration 3, selon un débit et une pression aptes à répondre à de quelconques besoins en carburant de l'organe moteur. Le circuit d'alimentation 4 est en communication fluidique avec l'éjecteur d'alimentation 15 par l'intermédiaire de la bouche de sortie 22 du canal principal 20.

La pompe d'aspiration 3 est d'une capacité propre à générer une haute pression, telle que précédemment visée de l'ordre du bar, pour pouvoir répondre à un approvisionnement de l'organe moteur en carburant selon un débit susceptible de varier considérablement. La variation de débit d'approvisionnement de l'organe moteur en carburant est induite en fonction des besoins momentanés en carburant de l'organe moteur, au regard des différentes phases et modalités ponctuelles de son fonctionnement. A titre indicatif, les besoins en carburant de l'organe moteur au démarrage sont de l'ordre de 40 l/h (litres par heures) à 60 l/h, et sont en moyenne de l'ordre compris entre 300 l/h et 500 l/h en phase de fonctionnement.

Le circuit de transfert 10 est mis en communication fluidique avec l'éjecteur d'alimentation 15 par l'intermédiaire de la buse 17. Le flux primaire 18 de carburant est fourni par le circuit de transfert 10, en étant acheminé à faible pression générée par la pompe de transfert 12.

Sur la fig.2, l'éjecteur d'alimentation 15 est utilisé pour permettre un amorçage de la pompe d'aspiration 3 préalablement au démarrage de l'organe moteur et à l'activation du fonctionnement de la pompe d'aspiration 3. Le carburant est acheminé vers la buse 17 par l'intermédiaire du circuit de transfert 10, circule le long du canal principal 20 en un dit flux primaire 18, puis est évacué hors de l'éjecteur d'alimentation 15 vers le circuit d'alimentation 4 à travers la bouche de sortie 22. La pression du flux primaire 18 fournie à partir de la pompe de transfert 12 est suffisante pour surpasser la colonne formée par le circuit d'alimentation 4. Le débit de carburant en provenance du circuit de transfert 10 étant conséquent et à basse pression, il est observé un refoulement 25 de carburant vers la nourrice à travers le canal secondaire 24.

Sur la fig.3, l'éjecteur d'alimentation 15 est utilisé pour alimenter le circuit d'alimentation 4 à partir d'une aspiration de carburant prélevé à l'intérieur de la nourrice en phase de fonctionnement de l'organe moteur. Le débit de carburant en sortie du canal principal 20 est régulé à partir de la pompe d'aspiration 3 placée sous contrainte des moyens de commande de l'injection de carburant vers l'organe moteur selon ses besoins ponctuels. Le fonctionnement de la pompe de transfert 12 est maintenu activé pour alimenter la nourrice en continu. Le canal secondaire 24 est mis à profit pour refouler un éventuel surplus de carburant en fonction du débit du carburant évacué 23 vers le circuit d'alimentation 4 à travers le canal principal 20, sous l'effet de l'aspiration du carburant générée par la pompe d'aspiration 3. Un reflux de carburant 25 à travers le canal secondaire est notamment induit lors du démarrage de l'organe moteur, dont les besoins en carburant sont faibles.

Quel que soit le débit de carburant en provenance du circuit de transfert 10 et admis par l'éjecteur d'alimentation 15, le débit de carburant évacué 23 hors de l'éjecteur d'alimentation 15 vers le circuit d'alimentation 4 est régulé à partir de la pompe d'aspiration 3 en fonction des besoins ponctuels en carburant de l'organe moteur. Il est constaté que le flux primaire 18 de carburant à basse pression admis par l'éjecteur d'alimentation 15 à partir du circuit de transfert 10 procure une pression d'appoint à l'aspiration générée en sortie de l'éjecteur d'alimentation 15 par la pompe d'aspiration 3. Une telle pression d'appoint présente l'avantage de conforter la mise en circulation du carburant à travers le circuit d'alimentation 4, pour surpasser la colonne qu'il forme.

Sur la fig.4, l'éjecteur d'alimentation est dimensionné pour permettre un approvisionnement en carburant de l'organe moteur quels que soient ses besoins. Le graphique représenté sur la fig.4 illustre des conditions de fonctionnement de l'éjecteur d'alimentation dépendantes d'un tel dimensionnement.

Il est plus particulièrement illustré la relation entre une pression P en sortie de l'éjecteur d'alimentation et un débit D du carburant circulant à travers le canal principal de l'éjecteur d'alimentation. La zone A correspond à un palier de référence selon lequel le débit de carburant en sortie de l'éjecteur d'alimentation est nul pour une pression générée en sortie du canal principal comprise entre 150 et 200 millibars environ.

Au regard de la plage B, il est constaté que l'éjecteur d'alimentation peut refouler du carburant en générant une pression P supérieure à celle dont relève le palier de référence. En phase de démarrage de l'organe moteur, ses besoins en carburant sont de l'ordre inférieur à 100 l/h, tel qu'à titre d'exemple de l'ordre de 50 l/h. La pompe d'aspiration est génératrice d'une aspiration de carburant à travers le canal principal comprise entre 300 l/h et 500 l/h, tel qu'à titre indicatif selon le dit exemple de l'ordre de 400 l/h. L'éjecteur d'alimentation reflue à travers le canal secondaire du carburant, à titre indicatif selon le dit exemple de l'ordre de 350 l/h, en générant une pression P supérieure à celle du palier de référence A. Une telle pression P permet de surpasser les pertes de charge induites par la colonne du circuit d'alimentation.

En phase de fonctionnement nominal de l'organe moteur et au regard de la plage C, les besoins en carburant de l'organe moteur correspondent au débit de carburant sensiblement admis par l'éjecteur d'alimentation à partir du circuit de transfert. L'éjecteur d'alimentation ne refoule plus de carburant à travers le canal secondaire, et tend à perdre de la pression P qui demeure néanmoins suffisante pour surpasser la colonne du circuit d'alimentation.

Il est à considérer que dans le cas d'une éventuelle défaillance de la pompe de transfert 12, l'approvisionnement de l'organe moteur 2 en carburant est maintenu à partir de son aspiration à travers l'éjecteur d'alimentation 15 par la pompe d'aspiration 3 depuis la nourrice 5. Les pertes de charge induites par la traversée de l'éjecteur d'alimentation 15 par le carburant sont acceptables, à titre indicatif de l'ordre de 15 millibars pour un dimensionnement de l'éjecteur d'alimentation correspondant aux valeurs indiquées pour exemple de débit D et de pression P du carburant aspiré par la pompe d'aspiration 3.

Il est encore à considérer qu'une éventuelle détérioration du circuit d'alimentation 4 interrompt l'aspiration du carburant depuis la nourrice 5 par la pompe d'aspiration 3. Une telle détérioration est par exemple susceptible d'être provoquée lors d'un atterrissage d'urgence du giravion. En cas d'une telle détérioration, il est évité une déperdition du carburant à travers une zone endommagée du circuit d'alimentation 4, avec pour avantage de préserver l'environnement et de conforter la sécurisation du giravion au sol. En cas de détérioration du circuit d'alimentation 4, la pression P en sortie de l'éjecteur d'alimentation 15 à travers la bouche de sortie 22 chute naturellement. En raison de la mise à l'air libre du circuit d'alimentation 4, le carburant admis à travers l'éjecteur d'alimentation 15 à basse pression à partir du circuit de transfert 10 est évacué vers la nourrice 5 à travers le canal secondaire 24.

## Revendications

1. Réseau fluidique d'alimentation en carburant d'au moins un organe moteur (2) d'un groupe de motorisation d'entraînement en rotation d'au moins une voilure tournante (1) d'un giravion, le réseau fluidique comportant :
-) au moins un réservoir (9) à carburant logeant une nourrice (5) alimentée en carburant à partir du réservoir (9) par l'intermédiaire d'un circuit de transfert (10) à basse pression du carburant depuis le réservoir (9) vers la nourrice (5),
-) le dit circuit de transfert (10) comportant au moins un éjecteur de transfert (13) plongé dans le réservoir (9),
-) une pompe d'aspiration (3) du carburant pour équiper l'organe moteur (2), la pompe d'aspiration (3) prélevant le carburant depuis la nourrice (5) et l'acheminant à haute pression vers l'organe moteur (2) à travers un circuit d'alimentation et le circuit de alimentation (4) est muni d'un éjecteur d'alimentation (15) plonge à l'intérieur de la nourrice (5), l'éjecteur d'alimentation comportant:
- une buse (17) d'admission d'un flux primaire (18) de carburant vers un canal principal (20) à retreint (21) débouchant sur le circuit d'alimentation (4) et
- un canal secondaire (24) de circulation d'un flux secondaire de carburant, le canal secondaire (24) débouchant en amont du canal principal (20),
caractérisé :
-)en ce que le reseau fluidique comportant
- au moins une pompe de transfert (12) plongée dans la nourrice (5)
- une pompe d'amorçage en carburant de la pompe d'aspiration (3), la pompe d'amorçage étant plongée dans la nourrice (5) à partir de laquelle nourrice (5) la pompe d'amorçage prélève du carburant et le refoule vers le circuit d'alimentation (4), et
- ) en ce que la pompe d'amorçage est formée par la pompe de transfert (12), le circuit de transfert (10) comportant une dérivation (16) d'admission à travers la buse (17) d'un dit flux primaire (18) de carburant vers le canal principal (20), ladite admission du flux primaire (18) de carburant étant alimentée par le circuit de transfert (10) en étant forcée à basse pression par la pompe de transfert (12).

2. Réseau fluidique selon la revendication 1,
**caractérisé en ce que** la dite dérivation (16) est ménagée sur le circuit de transfert (10) en aval de la pompe de transfert (12) et en amont de l'éjecteur de transfert (13).

3. Réseau fluidique selon l'une quelconque des revendications 1 et 2,
**caractérisé en ce que** la mise en oeuvre de la pompe d'aspiration (3) étant inhibée, l'éjecteur d'alimentation (15) est un organe de refoulement à basse pression et à faible débit vers le circuit d'alimentation (4) d'un flux d'amorçage en carburant de la pompe d'aspiration (3), le dit flux d'amorçage (3) étant alimenté à partir du flux primaire (18) de carburant en provenance du circuit de transfert (10), un excès de carburant (25) étant évacué hors de l'éjecteur d'alimentation (15) à travers le canal secondaire (24).

4. Réseau fluidique selon l'une quelconque des revendications 1 à 3,
**caractérisé en ce que** la mise en oeuvre de la pompe d'aspiration (3) étant activée, l'éjecteur d'alimentation (15) est un organe d'aspiration de carburant entraîné à travers le canal principal (20) vers le circuit d'alimentation (4) par la pompe d'aspiration (3), la pompe de transfert (12) générant un apport marginal en pression au flux de carburant évacué (23) hors de l'éjecteur d'alimentation (15) vers le circuit d'alimentation (4), le débit du dit flux de carburant évacué (23) étant régulé par la pompe d'aspiration (3).

5. Méthode de mise en oeuvre d'un réseau fluidique selon l'une quelconque des revendications 1 à 4,
**caractérisée en ce que** préalablement à une opération de démarrage de l'organe moteur (2), la méthode comprend en phase d'amorçage de la pompe d'aspiration (3) une opération de refoulement par l'éjecteur d'alimentation (15) vers le circuit d'alimentation (4) d'un flux de carburant (25) à basse pression et faible débit d'amorçage de la pompe d'aspiration (3), le carburant étant prélevé à partir de la nourrice (5) par l'intermédiaire du circuit de transfert (10), la dite opération de refoulement étant effectuée à partir d'une activation du fonctionnement de la pompe de transfert (12).

6. Méthode selon la revendication 5,
**caractérisée en ce qu'**en phase d'amorçage de la pompe d'aspiration,
-) la pompe de transfert formant la pompe d'amorçage est mise en oeuvre à une pression de fonctionnement propre à l'approvisionnement en carburant de la nourrice depuis le réservoir, ladite pression de fonctionnement étant inférieure à une pression d'amorçage propre à entraîner du carburant à travers le circuit d'alimentation depuis la nourrice jusqu'à la pompe d'aspiration en procurant son amorçage, et
-) l'éjecteur produit une pressurisation et un refoulement vers le circuit d'alimentation du flux de carburant qu'il reçoit en provenance du circuit de transfert, à une pression au moins égale à ladite pression d'amorçage.

7. Méthode selon l'une quelconque des revendications 5 et 6,
**caractérisée en ce qu'**en phase de fonctionnement de l'organe moteur (2), la méthode comprend une opération de régulation par la pompe d'aspiration (3) du débit de carburant entraîné par aspiration à travers l'éjecteur d'alimentation (15) depuis la nourrice (5) vers le circuit d'alimentation (4), ladite régulation de débit de carburant étant effectuée par aspiration régulée du carburant par la pompe d'aspiration (3) indépendamment du débit de carburant admis en force à travers l'éjecteur d'alimentation (15) depuis le circuit de transfert (10) alimenté en carburant par la pompe de transfert (12) dont la mise en oeuvre est maintenue activée.

8. Méthode selon la revendication 7,
**caractérisée en ce que** la pression en sortie de l'éjecteur d'alimentation (15) du flux de carburant admis vers le circuit d'alimentation (4) sous l'effet de son entraînement par la pompe d'aspiration (3), est confortée par la basse pression du flux primaire (18) de carburant dont l'admission vers l'éjecteur d'alimentation (15) est entretenue par le maintien de la mise en oeuvre de la pompe de transfert (12).

9. Méthode selon l'une quelconque des revendications 5 à 8,
**caractérisée en ce qu'**indifféremment en phase d'amorçage de la pompe d'aspiration (3) ou en phase de démarrage de l'organe moteur (2), un éventuel surplus de carburant admis par l'éjecteur d'alimentation (15) depuis le circuit de transfert (10) est refoulé vers la nourrice (5) à travers le canal secondaire (24) de l'éjecteur d'alimentation (15).

## Patentansprüche

1. Fluidleitungsnetz zur Versorgung mindestens eines Antriebsorganes (2) einer Drehantriebseinheit mindestens eines Drehflügels (1) eines Drehflügel-Luftfahrzeugs mit Kraftstoff, wobei das Fluidleitungsnetz aufweist:
-) mindestens einen Kraftstofftank (9), in dem sich eine Einbringungseinheit (5) befindet, die aus dem Tank (9) durch eine Übertragungsleitung (10) mit niedrigem Kraftstoffdruck von dem Tank (9) zur Einbringungseinheit (5) mit Kraftstoff versorgt wird,
-) wobei die Übertragungsleitung (10) mindestens eine Übertragungspumpe (13) aufweist, die in den Tank (9) eingetaucht ist,
-) eine Kraftstoffsaugpumpe (3) zum Ausrüsten des Antriebsorgans (2), wobei die Saugpumpe (3) den Kraftstoff von der Einbringungseinheit (5) abzweigt und ihn unter hohem Druck dem Antriebsorgan (2) über eine Versorgungsleitung zuführt, wobei die Versorgungsleitung (4) mit einer Versorgungspumpe (15) versehen ist, die im Inneren der Einbringungseinheit (5) eingetaucht ist, wobei die Versorgungspumpe aufweist:
- eine Düse (17) zur Zulassung eines Primärstroms (18) von Kraftstoff in einen Hauptkanal (20) mit einer Verengung (21), der in der Versorgungsleitung (4) mündet, und
- einen Sekundärströmungskanal (24) eines Sekundärstroms von Kraftfstoff, wobei der sekundäre Kanal (24) stromauf bezüglich des Hauptkanals (20) mündet,
**dadurch gekennzeichnet**,
- ) dass das Fluidleitungsnetz aufweist:
- mindestens eine Übertragungspumpe (12), die in die Einbringungseinheit (5) eingetaucht ist,
- eine Kraftstoffansaugpumpe der Saugpumpe (3), wobei die Kraftstoffansaugpumpe in die Einbringungseinheit (5) eingetaucht ist, wobei ausgehend von der Einbringungseinheit (5) die Kraftstoffansaugpumpe Kraftstoff entnimmt und ihn in die Versorgungsleitung (4) abgibt, und
- ) dass die Kraftstoffansaugpumpe gebildet wird aus der Übertragungspumpe (12), der Übertragungsleitung (10), die eine Umleitung (16) der Zulassung des Primärflusses (18) von Kraftstoff über die Düse (17) in den Hauptkanal (20) aufweist, wobei der Zugang des Primärflusses (18) von Kraftstoff durch die Übertragungsleitung (10) gespeist wird und mit niedrigem Druck durch die Übertragungspumpe (12) erzwungen wird.

2. Fluidleitungsnetz nach Anspruch 1,
**dadurch gekennzeichnet, dass** die Umleitung (16) in der Übertragungsleitung (10) stromab der Übertragungspumpe (12) und stromauf der Übertragungspumpe (13) angeordnet ist.

3. Fluidleitungsnetz nach einem der Ansprüche 1 und 2,
**dadurch gekennzeichnet, dass**, wenn der Betrieb der Saugpumpe (3) blockiert ist, die Versorgungspumpe (15) ein Organ ist zum Zurückführen eines Ansaugflusses von Kraftstoff bei niedrigem Druck und niedrigem Durchsatz zur Versorgungsleitung (4), wobei der Saugfluss (3) gespeist wird ausgehend von dem Primärfluss (18) von Kraftstoff, der von der Übertragungsleitung (10) kommt, wobei ein Kraftstoffüberschuss (25) aus der Versorgungspumpe (15) über den sekundären Kanal (24) abgesaugt wird.

4. Fluidleitungsnetz nach einem der Ansprüche 1 bis 3,
**dadurch gekennzeichnet, dass**, wenn der Betrieb der Saugpumpe (3) aktiviert ist, die Versorgungspumpe (15) ein Kraftstoffansaugorgan ist, das durch den Hauptkanal (20) zu der Versorgungsleitung (4) durch die Saugpumpe (3) angetrieben wird, wobei die Übertragungspumpe (12) einen vernachlässigbaren Beitrag zu dem Druck des zu der Versorgungsleitung (4) hin aus der Versorgungspumpe (15) abgesaugten Kraftstoffs (23) leistet, wobei der Durchsatz des abgesaugten Kraftstoffflusses (23) durch die Saugpumpe (3) reguliert wird.

5. Verfahren zum Einsatz eines Fluidleitungsnetzes nach einem der Ansprüche 1 bis 4,
**dadurch gekennzeichnet, dass** vor einem Startvorgang des Antriebsorgans (2) das Verfahren in der Ansaugphase der Saugpumpe (3) einen Schritt des Zurückströmenlassens eines Kraftstoffflusses (25) mit niedrigem Druck und geringem Saugdurchsatz der Saugpumpe (3) zur Versorgungsleitung (4) durch die Versorgungspumpe (15) aufweist, wobei der Kraftstoff über die Übertragungsleitung (10) der Einbringungseinheit (5) entnommen wurde, wobei der Schritt des Zurückströmenlassens durchgeführt wird ausgehend von einer Aktivierung des Betriebs der Übertragungspumpe (12).

6. Verfahren nach Anspruch 5,
**dadurch gekennzeichnet, dass** in der Ansaugphase der Saugpumpe
-) die Übertragungspumpe, die die Saugpumpe bildet, bei einem Betriebsdruck eingesetzt wird, der zur Versorgung der Einbringungseinheit mit Kraftstoff aus dem Tank geeignet ist, wobei der Betriebsdruck kleiner ist als ein Ansaugdruck zum Bewegen des Kraftstoffs durch die Versorgungsleitung ausgehend von der Einbringungseinheit bis zur Saugpumpe, die dessen Ansaugen bewirkt, und
-) die Pumpe eine Druckbeaufschlagung und ein Zurückströmenlassen zur Versorgungsleitung des Kraftstoffflusses erzeugt, den sie von der Übertragungsleitung bei einem Druck empfängt, der mindestens gleich dem Ansaugdruck ist.

7. Verfahren nach einem der Ansprüche 5 und 6,
**dadurch gekennzeichnet, dass** während der Betriebsphase des Antriebsorgans (2) das Verfahren einen Schritt der Regelung des Kraftstoffdurchsatzes aufweist, der durch Ansaugen durch die Versorgungspumpe von der Einbringungseinheit (5) zu der Versorgungsleitung (4) bewirkt wird, wobei die Kraftstoffdurchsatzregelung durch geregeltes Ansaugen des Kraftstoffes durch die Saugpumpe (3) erfolgt unabhängig von dem Kraftstoffdurchsatz, der gewaltsam durch die Versorgungspumpe (15) zugelassen wird ausgehend von der Übertragungsleitung (10), die von der Übertragungspumpe (12) mit Kraftstoff gespeist wird, wobei der Einsatz der Übertragungspumpe aktiviert gehalten wird.

8. Verfahren nach Anspruch 7,
**dadurch gekennzeichnet, dass** der Druck des Kraftstoffflusses am Ausgang der Versorgungspumpe (15), der zur Versorgungsleitung (4) durch seine Bewegung durch die Saugpumpe (3) zugelassen ist, unterstützt wird durch den niedrigen Druck des Primärflusses (18) von Kraftstoff, dessen Zufuhr zur Versorgungspumpe (15) durch den Einsatz der Übertragungspumpe (12) aufrechterhalten wird.

9. Verfahren nach einem der Ansprüche 5 bis 8,
**dadurch gekennzeichnet, dass** sowohl in der Ansaugphase der Saugpumpe (3) als auch in der Phase des Startens des Antriebsorgans (2) ein eventueller Überschuss an Kraftstoff, der von der Versorgungspumpe (15) ausgehend von der Übertragungsleitung (10) zugelassen wird, durch den Sekundärkanal (24) der Versorgungspumpe (15) zurückgedrängt wird.

## Claims

1. A fluidic network for feeding fuel to at least one engine member (2) of a power plant for driving in rotation at least one rotary wing (1) of a rotorcraft, the fluidic network comprising:
-) at least one fuel tank (9) accommodating a feeder (5) which is fed with fuel from the tank (9) by means of a transfer circuit (10) for transferring fuel at low pressure from the tank (9) to the feeder (5),
-) said transfer circuit (10) comprising at least one transfer ejector (13) immersed in the tank (9),
-) a suction pump (3) for the fuel for equipping the engine member (2), the suction pump (3) taking the fuel from the feeder (5) and conveying it at high pressure to the engine member (2) via a feed circuit, and
the feed circuit (4) is provided with a feed ejector (15) immersed within the feeder (5), the feed ejector comprising:
- a nozzle (17) for admitting a primary stream (18) of fuel to a main channel (20) having a constriction (21) and opening on to the feed circuit (4), and
- a secondary channel (24) for circulating a secondary stream of fuel, the secondary channel (24) opening upstream from the main channel (20),
characterised:
-) in that, the fluidic network comprising
- at least one transfer pump (12) immersed in the feeder (5)
- a priming pump for priming the suction pump (3) with fuel, the priming pump being immersed in the feeder (5), from which feeder (5) the priming pump takes fuel and delivers it to the feed circuit (4), and
-) in that the priming pump is formed by the transfer pump (12), the transfer circuit (10) comprising a branch (16) for admission via the nozzle (17) of a said primary stream (18) of fuel to the main channel (20), said admission of the primary stream (18) of fuel being fed by the transfer circuit (10), being forced at low pressure by the transfer pump (12).

2. A fluidic network according to Claim 1,
**characterised in that** said branch (16) is provided on the transfer circuit (10) downstream from the transfer pump (12) and upstream from the transfer ejector (13).

3. A fluidic network according to any one of Claims 1 and 2,
**characterised in that**, the operation of the suction pump (3) being inhibited, the feed ejector (15) is a member for delivery, at low pressure and low flow rate, to the feed circuit (4) of a priming stream of fuel of the suction pump (3), said priming stream (3) being fed from the primary stream (18) of fuel coming from the transfer circuit (10), an excess of fuel (25) being discharged outside the feed ejector (15) through the secondary channel (24).

4. A fluidic network according to any one of Claims 1 to 3,
**characterised in that**, the operation of the suction pump (3) being activated, the feed ejector (15) is a member for intake of fuel driven through the main channel (20) to the feed circuit (4) by the suction pump (3), the transfer pump (12) generating a marginal contribution in terms of pressure to the stream of fuel (23) evacuated from the feed ejector (15) to the feed circuit (4), the flow rate of said stream of fuel (23) which is evacuated being regulated by the suction pump (3).

5. A method for implementing a fluidic network according to any one of Claims 1 to 4,
**characterised in that**, prior to an operation of starting the engine member (2), the method comprises, in the priming phase of the suction pump (3), an operation of delivery by the feed ejector (15) to the feed circuit (4) of a stream of fuel (25) at low pressure and low flow rate for priming the suction pump (3), the fuel being taken from the feeder (5) by means of the transfer circuit (10), said delivery operation being effected starting from activation of the operation of the transfer pump (12).

6. A method according to Claim 5,
**characterised in that** in the priming phase of the suction pump,
-) the transfer pump forming the priming pump is operated at an operating pressure suitable for supplying the feeder with fuel from the tank, said operating pressure being less than a priming pressure suitable for driving fuel through the feed circuit from the feeder to the suction pump, effecting the priming thereof, and
-) the ejector brings about pressurisation and delivery to the feed circuit of the stream of fuel which it receives coming from the transfer circuit, at a pressure at least equal to said priming pressure.

7. A method according to any one of Claims 5 and 6,
**characterised in that** in the phase of operation of the engine member (2), the method comprises an operation of regulation by the suction pump (3) of the flow rate of fuel driven by suction through the feed ejector (15) from the feeder (5) to the feed circuit (4), said regulation of the flow rate of fuel being effected by regulated intake of the fuel by the suction pump (3) independently of the flow rate of fuel admitted by force through the feed ejector (15) from the transfer circuit (10) which is fed with fuel by the transfer pump (12), the operation of which is kept activated.

8. A method according to Claim 7,
**characterised in that** the pressure at the outlet from the feed ejector (15) of the stream of fuel admitted to the feed circuit (4) under the action of the entraining thereof by the suction pump (3), is reinforced by the low pressure of the primary stream (18) of fuel the admission of which to the feed ejector (15) is maintained by keeping the transfer pump (12) in operation.

9. A method according to any one of Claims 5 to 8,
**characterised in that** equally well in the priming phase of the suction pump (3) or in the start-up phase of the engine member (2), any surplus of fuel admitted by the feed ejector (15) from the transfer circuit (10) is delivered to the feeder (5) via the secondary channel (24) of the feed ejector (15).
